# FASCICULE DE BREVET EUROPEEN

(11) **EP 0 559 885 B1**
(45) Date de publication et mention de la délivrance du brevet: **10.04.1996**
(21) Numéro de dépôt: 92921966.5
(22) Date de dépôt: 30.09.1992
(51) Int. Cl.: C08F 4/42, C08F 4/72, C08F 10/02

(54) **CATALYSEURS ET PROCEDE DE PREPARATION DE CATALYSEURS UTILISABLES POUR LA POLYMERISATION DE L'ETHYLENE**
Katalysatoren, ihre Herstellung mit ihre Anwendungen für die Ethylenpolymerisation
CATALYSTS AND PROCESS FOR THE PREPARATION OF SAME FOR USE IN THE POLYMERISATION OF ETHYLENE

(30) Priorité: 01.10.1991 FR 9112049
(43) Date de publication de la demande: 15.09.1993
(73) Titulaire: ECP ENICHEM POLYMERES FRANCE, F-92411 Courbevoie (FR)
(72) Inventeur: OLONDE, Xavier, F-59960 Neuville-en-Ferrain (FR); BUJADOUX, Karel, F-62300 Lens (FR); MORTREUX, André, F-59510 Hem (FR); PETIT, Francis, F-59650 Villeneuve-d'Ascq (FR)
(74) Mandataire: Chaillot, Geneviève
(86) Numéro de dépôt international: FR9200917
(87) Numéro de publication internationale: WO9307180

(56) Documents cités:
- WO-A-86/05788
- US-A- 4 665 046
- US-A- 5 028 673

## Description

La présente invention concerne des catalyseurs et un procédé de préparation de catalyseurs de polymérisation, ainsi qu'un procédé de polymérisation de l'éthylène mettant en oeuvre lesdits catalyseurs.

Il est connu de polymériser l'éthylène dans de larges gammes de températures et de pressions au moyen de catalyseurs et systèmes catalytiques contenant des dérivés de métaux de transition et des dérivés organométalliques. Ces systèmes catalytiques dits ZIEGLER-NATTA ont été sans cesse améliorés de façon à augmenter leur activité. Ainsi les résidus catalytiques ne subsistent plus dans le polymère qu'à l'état de traces qu'il serait antiéconomique de vouloir éliminer par un traitement. Les teneurs présentes sont actuellement admises au niveau écotoxicologique.

Cependant, dans la mesure où la présence du résidu catalytique dans le polymère est inévitable, même à des teneurs extrêmement faibles, à la limite de la détection, on a cherché quels catalyseurs pouvaient être choisis de telle sorte que leurs résidus, si infimes soient-ils, ne présentent aucun risque pour la santé et l'environnement.

Parmi les éléments dont les sels et dérivés sont connus pour ne pas présenter de toxicité, figurent ceux de la famille des lanthanides. La demanderesse a donc tenté de remplacer les systèmes catalytiques de ZIEGLER-NATTA par des catalyseurs contenant des composés de lanthanides.

Il est connu par le document WO-A-86 05788 de polymériser les oléfines sous une pression d'environ 1 bar à une température comprise entre -78 et +80°C au moyen d'un catalyseur comprenant un composé de type Cp'₂MR ou cp'₂MH dans lesquels Cp' est le radical pentaméthylcyclopentadiényle, M est choisi parmi le lanthane, le néodyme, le samarium et le lutétium, R est un radical alkyle très encombré tel que le radical bis(triméthylsilyl)méthyle de formule -CH[Si(CH₃)₃]₂ ou tel que le radical mésitylène de formule :

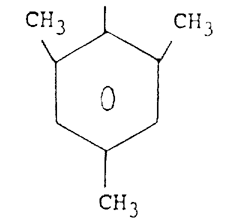

La synthèse de ces composés est très compliquée. Particulièrement, celle des composés de formule Cp'₂MH nécessite une hydrogénation suivie d'une filtration, lavage et séchage.

Dans un but de simplification, la demanderesse a cherché à s'affranchir des dernières étapes de la synthèse de ces composés, particulièrement des étapes de séparation. Elle a également cherché à éviter l'utilisation de réactifs possédant des groupements encombrants (triméthylsilyle ou mésitylène). La demanderesse a ainsi tenté de mettre au point un catalyseur de polymérisation à partir du produit de la première étape de la suite de réactions décrite dans le document WO-A-86 05788.

La présente invention a donc d'abord pour objet un catalyseur pour la polymérisation de l'éthylène, caractérisé par le fait qu'il consiste en le produit de réaction du composé de formule Cp^{*}₂NdCl₂Li(OEt₂)₂, dans laquelle Cp^{*} représente le radical pentaméthylcyclopentadiényle et Et le radical éthyle, avec au moins un réactif choisi parmi les composés organomagnésiens et les composés organolithiens de formule RLi dans laquelle R est un radical alkyle comportant au plus 12 atomes de carbone, ou de formule ArLi dans laquelle Ar est le noyau phényle ou le radical benzyle C₆H₅-CH₂-.

Le catalyseur selon la présente invention se présente avantageusement sous la forme d'une solution contenant, au moins partiellement, un hydrocarbure aromatique, solution dont la concentration, exprimée en néodyme, est avantageusement comprise entre 0,1 et 100 mmoles/litre. Quand aux réactifs utilisables, les détails les concernant sont indiqués plus loin.

Ainsi un autre objet de la présente invention consiste en un procédé de préparation d'un catalyseur pour la polymérisation de l'éthylène comprenant un composé de néodyme, consistant dans une première étape à préparer le produit de formule Cp^{*}₂NdCl₂Li(OEt₂)₂, dans laquelle Cp^{*} représente le radical pentaméthylcyclopentadiényle et Et le radical éthyle, caractérisé en ce que, dans une deuxième étape, ledit produit est mis à réagir avec au moins un réactif choisi parmi les composés organomagnésiens et les composés organolithiens de formule RLi dans laquelle R est un radical alkyle comportant au plus 12 atomes de carbone, ou de formule ArLi dans laquelle Ar est le noyau phényle ou le radical benzyle C₆H₅-CH₂-.

La première étape de préparation du catalyseur, connue en soi, consiste à faire réagir le butyllithium sur le pentaméthylcyclopentadiène pour obtenir le pentamethylcyclopentadiényllithium, puis à faire réagir deux moles de ce composé avec une mole de trichlorure de néodyme NdCl₃ anhydre, généralement dans le tétrahydrofuranne (THF) à reflux, la réaction étant suivie de l'évaporation du THF, d'une extraction à l'éther, d'une évaporation de l'éther des phases liquides jusqu'à obtenir une solution concentrée qui est refroidie entre 0 et -20°C et laisse ainsi se former des cristaux violets du composé Cp^{*}₂NdCl₂Li(OEt₂)₂.

Selon la présente invention, ce composé obtenu à la fin de la première étape est mis à réagir avec un organomagnésien ou un organolithien. Parmi les organomagnésiens, on choisit, de préférence, au moins un composé de formule R-Mg-R' dans laquelle R et R', identiques ou différents, sont des radicaux alkyle, substitués ou non, ayant de 1 à 8 atomes de carbone. On utilise avantageusement le n-butyléthylmagnésium, le di(isobutyl)magnésium, le di(n-hexyl)magnésium, le n-butyl-n-octylmagnésium. Le composé organomagnésien peut également être un organomagnésien mixte tel que le chlorure d'allylmagnésium.

Parmi les organolithiens, on choisit avantageusement le méthyllithium, le n-butyllithium, le tertbutyllithium ou le phényllithium.

La deuxième étape du procédé de préparation du catalyseur est avantageusement mise en oeuvre à une température comprise entre -10 et +30°C, généralement sous pression atmosphérique de gaz inerte. De préférence, cette deuxième étape est effectuée en mettant en présence une solution du produit de la première étape et une solution du réactif, sous agitation. Le composé obtenu à la fin de la première étape, Cp^{*}₂NdCl₂Li(OEt₂)₂ est mis en solution dans tout solvant convenable. On choisit de préférence un hydrocarbure aromatique tel que le toluène. Le réactif (organomagnésien ou organolithien) est également en solution dans un solvant convenable, par exemple un hydrocarbure aliphatique saturé, ou bien le tetrahydrofuranne dans le cas du chlorure d'allylmagnésium.

Le temps de réaction pour cette deuxième étape peut varier dans de larges limites allant de quelques minutes à plusieurs heures. Le catalyseur ainsi obtenu est avantageusement utilisé dans les 15 à 150 minutes qui suivent le mélange du produit de la première étape et du réactif mais il peut être conservé 3 à 4 jours sans montrer de baisse sensible d'activité.

Une variante du procédé selon l'invention consiste à effectuer la réaction entre le produit de la première étape et le réactif dans un hydrocarbure aromatique puis à ajouter une quantité complémentaire de réactif en solution dans un hydrocarbure aliphatique saturé, par exemple une coupe d'hydrocarbures aliphatiques saturés en C₁₀-C₁₂.

La quantité de réactif mis à réagir avec le composé Cp^{*}₂NdCl₂Li(OEt₂)₂ est telle que le rapport molaire du métal du réactif (Mg ou Li) au néodyme soit au moins égal à 1, de préférence compris entre 2 et 25, avantageusement compris entre 2 et 5.

Selon le mode préféré de mise en oeuvre du procédé de préparation, le catalyseur est obtenu à l'état de solution légèrement opalescente, généralement dans un mélange de solvants. Sa concentration peut être ajustée à la valeur désirée, par évaporation sous vide ou bien ajout de solvant, avant son utilisation pour la polymérisation de l'éthylène. Avantageusement sa concentration en néodyme est comprise entre 0,1 et 100 mmoles/litre, de préférence entre 0,2 et 20 mmoles par litre.

Un autre objet de la présente invention consiste en un procédé de polymérisation de l'éthylène, caractérisé en ce qu'il consiste à utiliser comme catalyseur au moins un catalyseur tel que défini ci-dessus et/ou tel qu'obtenu au moyen du procédé de préparation décrit ci-dessus.

Le procédé de polymérisation de l'éthylène peut être mis en oeuvre à une température comprise entre 20° et 250°C, de préférence entre 50 et 200°C, sous une pression pouvant aller jusqu'à 200 bars environ, en solution ou en suspension dans un hydrocarbure inerte ayant au moins 6 atomes de carbone, tel qu'une coupe d'hydrocarbures aliphatiques saturés en C₁₀-C₁₂.

Le procédé de polymérisation de l'éthylène peut aussi être mis en oeuvre selon un mode continu, dans au moins un réacteur autoclave ou tubulaire, à une température comprise entre 150° et 300°C environ, sous une pression comprise entre 400 et 2000 bars environ, le milieu réactionnel étant à l'état hypercritique.

De façon à moduler la masse moléculaire du polyéthylène obtenu et son indice de fluidité, on peut opérer en présence de jusqu'à 2% en volume d'un agent de transfert tel que l'hydrogène, le propane, le butane ou même jusqu'à 50% en volume d'au moins une alpha-oléfine telle que le propylène, le buténe-1. En effet il y a lieu de faire remarquer ici la très grande sélectivité des catalyseurs obtenus selon le procédé de préparation décrit ci-dessus qui, même en présence de fortes quantités de buténe-1, par exemple, ne conduisent pas à des copolymères éthylène/ buténe-1 mais uniquement à l'homopolymère d'éthylène.

En faisant varier le rapport Mg/Nd (ou Li/Nd), la température et la pression de polymérisation, la quantité d'agent de transfert, il est possible d'obtenir des polyéthylènes linéaires, donc sans branches longues comme en contient le polyéthylène obtenu par voie radicalaire, mais également sans branches courtes comme en contiennent les copolymères d'éthylène et d'alpha-oléfines, présentant une très grande variété de masses moléculaires (allant de quelques centaines à plusieurs centaines de milliers de g/mole), d'indices de polydispersité (Mw/Mn), d'indices de fluidité (d'environ 1 à l'équivalent d'au moins 1000 selon la norme ASTMD-1238 condition E), avec des rendements catalytiques très élevés, d'au moins 10 kg de polyéthylène par millimole de néodyme, jusqu'à une vingtaine de kg pour les rendements les plus élevés observés jusqu'à présent en régime continu.

Ces rendements élevés permettent d'utiliser le catalyseur à des concentrations, dans l'éthylène mis à polymériser, extrêmement faibles, par exemple voisines de l'équivalent de 3 x 10⁻³ millimole de néodyme par litre d'éthylène.

On remarquera que les catalyseurs préparés selon l'invention ne nécessitent pas, contrairement aux catalyseurs ZIEGLER-NATTA classiques, d'être activés par exemple au moyen d'un activateur organo-aluminique.

Le polyéthylène haute densité obtenu au moyen du procédé de polymérisation selon l'invention trouve des applications et utilisations dans les domaines très variés bien connus, selon son indice de polydispersité et son indice de fluidité. On peut citer les fabrications d'objets finis très divers (films, feuilles, joncs, récipients, ...) par extrusion-soufflage, extrusion au moyen d'une filière plate, soufflage de corps creux, moulage par injection, etc.

Les exemples suivants ont pour but d'illustrer l'invention de façon non limitative.

### I - EXEMPLES 1 à 12 - PREPARATION DU CATALYSEUR

Les manipulations ont toutes été réalisées sous atmosphère d'azote ou d'argon sec et désoxygéné, avec des réactifs eux-mêmes purifiés.

### 1) Exemple 1 - Préparation du précurseur

Le bis(pentaméthylcyclopentadiényl)dichloro-bis(diéthyléther) néodymate III de lithium, de formule Cp*₂Ndcl₂Li(OEt₂)₂, ci-après désigné "le précurseur", a été préparé suivant le schéma réactionnel : 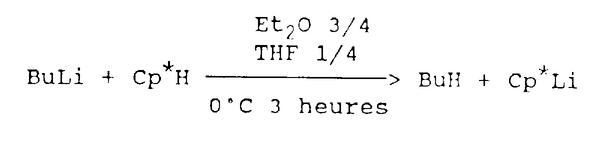 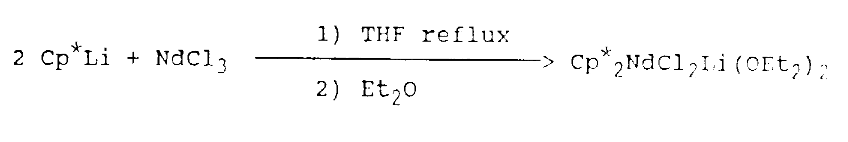 Bu étant le radical n-butyle, Cp^{*} le radical pentaméthylcyclopentadiényle, Et₂O le diéthyléther (C₂H₅)₂O, THF le tétrahydrofuranne, NdCl₃ le trichlorure de néodyme.

### a) Préparation de Cp^{*}Li

Dans un tube de Schlenk d'une capacité de 300 ml, on a introduit 4,9 g de Cp^{*}H (35,8 mmoles), puis 50 ml de THF et 100 ml de Et₂O. Le tout a été refroidi à 0°C au moyen d'un bain de glace. Une solution éthérée de BuLi (préparée par dilution, dans 50 ml de Et₂O à 0°C de 3,6 ml d'une solution à 10 moles de BuLi par litre dans l'hexane) a été ajoutée à 0°C goutte à goutte à la précédente sous vive agitation en 1 heure 1/2. Un précipité blanc volumineux de Cp^{*}Li s'est formé. On a laissé réagir à 20°C pendant 3 heures, puis la suspension gélatineuse a été filtrée.

Le précipité blanc de Cp^{*}Li a été lavé avec 20 ml de Et₂O et préséché sous courant d'argon et sous léger vide. Ensuite le produit a été transféré dans un tube de Schlenk puis séché sous vide à 20°C pendant 1 heure.

### b) Préparation du précurseur

Dans un tube de Schlenk, 4,7 g de Cp^{*}Li (33 mmoles), obtenus comme décrit ci-dessus, et 4,14 g de NdCl₃ anhydre (16,5 mmoles) ont été mis en suspension dans 170 ml de THF. Un réfrigérant a été fixé sur le tube de Schlenk et le THF porté à reflux pendant 12 heures. Peu après le début du reflux, les solides (NdCl₃ et Cp^{*}Li) se sont dissous pour donner une solution violette limpide.

Le THF a été évaporé à 20°C sous vide, le solide obtenu mis sous vide pendant 2 heures à 20°C, et ensuite extrait avec 2 fois 110 ml de Et₂O. Lorsque l'éther est ajouté, la solution est agitée pendant environ 1/2 heure, puis lors de la décantation, le LiCl se dépose. La solution surnageante a été transférée dans un autre tube de Schlenk. Les fractions éthérées ont été réunies puis concentrées à 110 ml par évaporation de l'éther à 20°C sous vide. La solution a alors été refroidie doucement à 0°C puis à -20°C pendant 2 jours. De larges cristaux violets de formule Cp^{*}₂NdCl₂Li(OEt₂)₂ ont été obtenus.

### 2) Exemples 2 à 12 - Préparation du catalyseur proprement dit

Le catalyseur proprement dit a été obtenu par réaction d'un réactif sur le précurseur obtenu à l'Exemple 1. Selon les conditions de polymérisation de l'éthylène envisagées (voir exemples 13 à 30, ci-après), la réaction a été effectuée soit dans le réacteur de polymérisation, soit extérieurement à celui-ci. La réaction a été réalisée à 20°C pendant 60 min, sous agitation, le précurseur étant préalablement dilué à environ 10 mmoles/l dans le toluène et le réactif étant également dilué au préalable, à une concentration d'environ 0,2 mole par litre dans le toluène, le benzène, le cyclohexane ou une coupe d'hydrocarbures aliphatiques saturés, ainsi qu'il sera précisé dans les exemples ci-après de polymérisation. La solution de catalyseur obtenue peut ensuite être diluée à la concentration souhaitée.

Le Tableau I ci-après précise pour chaque exemple, la nature du réactif utilisé et le rapport molaire du métal (Mg ou Li) du réactif au néodyme (M/Nd).

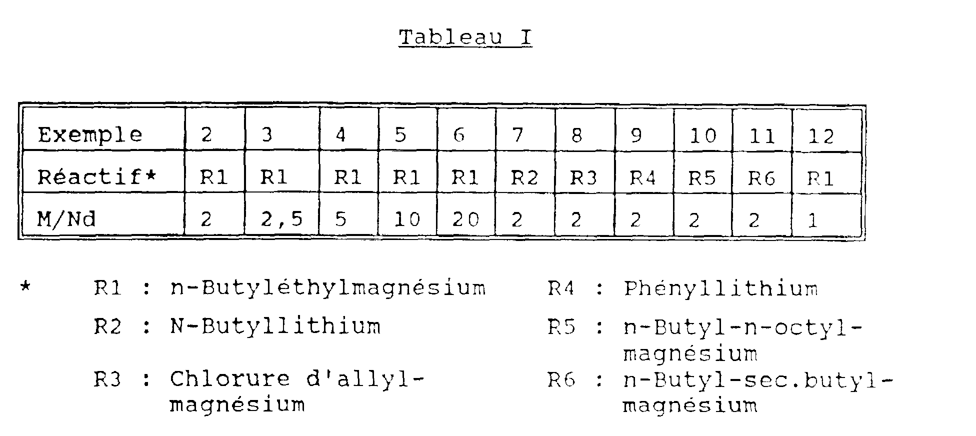

### II - EXEMPLES 13 à 30 - POLYMERISATION DE L'ETHYLENE

### 1) Exemples 13 à 16 - Polymérisation sous une pression de 1 bar

Dans un réacteur agité, thermostaté à 80°C au moyen d'un bain-marie, on a introduit 500 ml d'une coupe d'hydrocarbures aliphatiques saturés en C₁₀-C₁₂, on a purgé à l'azote, saturé d'éthylène jusqu'à une pression de 1,1 bar et injecté la quantité voulue de catalyseur (généralement voisine de 0,1 mmolé dans 10 ml de toluène). Après une durée de t minutes, on a introduit 20 ml d'éthanol pour arrêter la polymérisation et recueilli le polyéthylène obtenu qui fût alors séparé, lavé, séché et pesé. Le rendement catalytique R_{c} est exprimé en g de polyéthylène formé par millimole de néodyme et par heure.

Les résultats obtenus sont consignés au Tableau II.

**Tableau II**

| Exemple | 13 | 14 | 15 | 16 |
|---|---|---|---|---|
| Catalyseur selon l'exemple | 3 | 4 | 5 | 6 |
| durée t (min.) | 1 | 3 | 15 | 30 |
| Rc | 660 | 970 | 1240 | 230 |

### 2) Exemples 17 à 19 - Polymérisation sous une pression de 6 bars

Dans un réacteur autoclave d'une capacité de 1 litre, muni de moyens d'agitation et de régulation de température, on a introduit 600 ml d'une coupe d'hydrocarbures saturés en C₁₀-C₁₂ et purgé à l'azote en élevant la température à la valeur choisie. On a introduit alors l'éthylène jusqu'à une pression de 6 bars, puis le catalyseur (0,1 mmole exprimée en Nd). La pression de 6 bars a été maintenue pendant 1 minute.

Le contenu du réacteur a été alors déchargé et le polymère séparé, lavé, séché et pesé. La quantité obtenue Q est exprimée en grammes par millimole de néodyme par minute par mole. l⁻¹ d'éthylène.

On a fait figurer dans le Tableau III, le catalyseur utilisé, la température de l'essai (T, exprimée en °C) et la quantité Q de polyéthylène obtenu.

**Tableau III**

| Exemple | 17 | 18 | 19 |
|---|---|---|---|
| Catalyseur selon l'exemple | 2 | 12 | 2 |
| T | 160 | 160 | 60 |
| Q | 800 | 1000 | 140 |

### 3) Exemples 20 à 25 - Polymérisation sous une pression de 50 bars

Une quantité de catalyseur équivalant à 0,1 mmole de néodyme, en solution dans le toluène (50 ml) (exemples 20, 21, 22, 24) ou un mélange toluène-cyclohexane (50 ml) (exemple 23) ou un mélange toluène-benzène (50 ml) (exemple 25) a été introduite dans l'autoclave préalablement dégazé et séché (100°C sous vide puis refroidi à 20°C). L'éthylène a été alors introduit dans le réacteur jusqu'à la pression de 50 bars. Puis l'agitation a été mise en route. Généralement, la température s'élève à 120-150°C et la pression chute à quelques bars.

Si au bout de quelques minutes ni la pression, ni la température n'ont évolué, le réacteur est chauffé à 140°C et maintenu à cette température pendant 1 heure. Après refroidissement le polymère a été récupéré par précipitation avec de l'alcool éthylique.

Le Tableau IV ci-après indique pour chaque exemple le catalyseur utilisé, la quantité de polyéthylène formé exprimée en grammes, le cas échéant la température T d'initiation de la polymérisation (c'est-à-dire la température à partir de laquelle la pression d'éthylène diminue) exprimée en °C et le temps t de polymérisation exprimé en minutes.

**Tableau IV**

| Exemple | 20 | 21 | 22 | 23 | 24 | 25 |
|---|---|---|---|---|---|---|
| Catalyseur selon l'exemple | 7 | 2 | 5 | 2 | 8 | 9 |
| Q | 14,5 | 13 | 15 | 15 | 7 | 14 |
| T | 20 | 20 | 20 | 20 | 100 | 20 |
| t | 4 | 4 | 8 | 4 | 60 | 15 |

### 4) Exemples 26 à 30 - Polymérisation sous une pression de 1200 bars

L'installation de polymérisation fonctionne en régime continu et comprend un réacteur autoclave agité thermostaté, alimenté en éthylène au moyen de 2 compresseurs disposés en série, le premier compresseur recevant en outre l'éthylène n'ayant pas réagi et provenant d'un séparateur dans lequel le produit du réacteur s'écoule en continu. Le séparateur est disposé à la suite d'une vanne de détente située à la sortie du réacteur et est maintenu sous une pression d'environ 8 bars.

Le polymère recueilli au fond du séparateur est introduit dans une pompe d'extrusion puis granulé.

L'éthylène est introduit en continu dans le réacteur dans lequel est admis également le catalyseur préparé conformément aux exemples 2 à 6 mais avec un rapport molaire Mg/Nd égal à 3. La température est régulée à la valeur souhaitée pendant que la pression est maintenue à 1200 bars. Le polyéthylène recueilli après extrusion et granulation est pesé. Le rendement catalytique R_{c} est ici exprimé en kg de polyéthylène par milliatome-gramme de néodyme.

Sur le polyéthylène obtenu, on a déterminé :
- l'indice de fluidité IF, mesuré selon la norme ASTM D-1238 (conditions E) et exprimé en g/10 min.
- la densité d, mesurée selon la norme ASTM D-1505.
Les conditions utilisées et résultats obtenus figurent au Tableau V. On a indiqué par C la concentration de la solution de catalyseur injectée dans le réacteur, exprimée en millimoles de néodyme par litre. La température de polymérisation T est exprimée en °C. P et B représentent respectivement les taux de propane et/ou de buténe-1 utilisés comme diluant ou agent de transfert, en % en volume. Le butène-1 n'a pas copolymérisé avec l'éthylène.

**Tableau V**

| Exemple | 26 | 27 | 28 | 29 | 30 |
|---|---|---|---|---|---|
| C | 0,25 | 0,5 | 1 | 0,5 | 0,5 |
| T | 170 | 200 | 230 | 200 | 200 |
| P | 11 | 9 | 11 | 8 | 6 |
| B | 0 | 0 | 0 | 10 | 30 |
| R_{c} | 10 | 14 | 10 | 21 | 22 |
| IF | 1,3 | 40 | n.m | 73 | 300 |
| d | 0,96 | 0,97 | | | |

n.m : non mesurable (> 500)

Sur certains des polyéthylènes obtenus ci-dessus, on a mesuré en outre par chromatographie par perméation de gel les masses moléculaires moyennes en poids (Mw) et en nombre (Mn). Les valeurs obtenues figurent au Tableau VI ci-après ainsi que l'indice de polydispersité Mw/Mn et le taux B, en % en poids, de masses moléculaires inférieures à 5000. Les polyéthylènes obtenus ont tous un taux de branches courtes (taux de groupes CH₃) inférieur à 1 pour 1000 carbones et un point de fusion J voisin de 130°C.

**Tableau VI**

| Polyéthylène obtenu selon l'exemple n° | Mw | Mn | Mw/Mn | B |
|---|---|---|---|---|
| 19 | 425000 | 62500 | 6,8 | 1,2 |
| 17 | 1700 | 1100 | 1,5 | 97,8 |
| 27 | 40000 | 15000 | 2,7 | 5,7 |
| 26 | 77000 | 18000 | 4,3 | 5,7 |

A titre comparatif, on précise que, à 160°C et on présence de 6 bars d'éthylène, chacun des composés n-C₄H₉-Mg-C₂H₅, d'une part, et Cp^{*}₂Ndcl₂Li(OEt₂)₂, d'autre part, a présenté séparément une activité de polymérisation nulle : il ne s'est pas formé de polyéthylène.

## Revendications (Revendications pour l'(les) Etat(s) contractant(s) suivant(s): AT, BE, CH, LI, DE, DK, GB, GR, IE, IT, LU, NL, SE)

1. Catalyseur pour la polymérisation de l'éthylène, caractérisé par le fait qu'il consiste en le produit de réaction du composé de formule Cp^{*}₂NdCl₂Li(OEt₂)₂, dans laquelle Cp^{*} représente le radical pentaméthylcyclopentadiényle et Et le radical éthyle, avec au moins un réactif choisi parmi les composés organomagnésiens et les composés organolithiens de formule RLi dans laquelle R est un radical alkyle comportant au plus 12 atomes de carbone, ou de formule ArLi dans laquelle Ar est le noyau phényle ou le radical benzyle C₆H₅-CH₂-.

2. Catalyseur selon la revendication 1, caractérisé par le fait qu'il se présente sous la forme d'une solution contenant, au moins partiellement, un hydrocarbure aromatique.

3. Catalyseur selon la revendication 2, caractérisé en ce que sa concentration exprimée en néodyme est comprise entre 0,1 et 100 mmoles/litre.

4. Catalyseur selon l'une des revendications 1 à 3, caractérisé en ce que le réactif est un composé organomagnésien de formule R-Mg-R' dans laquelle R et R', identiques ou différents, sont des radicaux alkyle, substitués ou non, ayant de 1 à 8 atomes de carbone.

5. Catalyseur selon l'une des revendications 1 à 3, caractérisé en ce que le réactif est un composé organomagnésien mixte.

6. Procédé de préparation d'un catalyseur tel que défini à l'une des revendications 1 à 5, pour la polymérisation de l'éthylène, ledit procédé consistant dans une première étape à préparer le produit de formule Cp^{*}₂NdCl₂Li(OEt₂)₂, dans laquelle Cp^{*} représente le radical pentaméthylcyclopentadiényle et Et le radical éthyle, caractérisé en ce que, dans une deuxième étape, ledit produit est mis à réagir avec au moins un réactif choisi parmi les composés organomagnésiens et les composés organolithiens de formule RLi dans laquelle R est un radical alkyle comportant au plus 12 atomes de carbone, ou de formule ArLi dans laquelle Ar est le noyau phényle ou le radical benzyle C₆H₅-CH₂-.

7. Procédé selon la revendication 6, caractérisé en ce que la deuxième étape est mise en oeuvre à une température comprise entre -10° et +30°C.

8. Procédé selon l'une des revendications 6 et 7, caractérisé en ce que la deuxième étape est mise en oeuvre sous pression atmosphérique de gaz inerte.

9. Procédé selon l'une des revendications 6 à 8, caractérisé en ce que la deuxième étape est effectuée en mettant en présence une solution du produit de la première étape et une solution de réactif.

10. Procédé selon l'une des revendications 6 à 9, caractérisé en ce que le rapport du métal du réactif au néodyme, lors de la deuxième étape, est au moins égal à 1.

11. Procédé de polymérisation de l'éthylène, caractérisé en ce qu'il consiste à utiliser comme catalyseur au moins un catalyseur tel que défini à l'une des revendications 1 à 5.

12. Procédé de polymérisation selon la revendication 11, caractérisé en ce qu'il est mis en oeuvre à une température comprise entre 20° et 250°C, de préférence entre 50° et 200°C, sous une pression pouvant aller jusqu'à 200 bars, en solution ou en suspension dans un hydrocarbure inerte ayant au moins 6 atomes de carbone, tel qu'une coupe d'hydrocarbures aliphatiques saturés en C₁₀-C₁₂.

13. Procédé de polymérisation selon la revendication 11, caractérisé en ce qu'il est mis en oeuvre selon un mode continu, dans au moins un réacteur autoclave ou tubulaire, à une température comprise entre 150° et 300°C, sous une pression comprise entre 400 et 2000 bars, le milieu réactionnel étant à l'état hypercritique.

14. Procédé de polymérisation selon l'une des revendications 11 à 13, caractérisé en ce qu'il est mis en oeuvre en présence de jusqu'à 2% en volume d'un agent de transfert tel que l'hydrogène, le propane, le butane ou même jusqu'à 50% en volume d'au moins une alpha-oléfine telle que le propylène, le buténe-1.

## Revendications (Revendications pour l'(les) Etat(s) contractant(s) suivant(s): ES)

1. Procédé de préparation d'un catalyseur pour la polymérisation de l'éthylène, ledit procédé consistant, dans une première étape, à préparer le produit de formule Cp^{*}₂NdCl₂Li(OEt₂)₂, dans laquelle Cp^{*} représente le radical pentaméthylcyclopentadiényle et Et le radical éthyle, caractérisé en ce que, dans une deuxième étape, ledit produit est mis à réagir avec au moins un réactif choisi parmi les composés organomagnésiens et les composés organolithiens de formule RLi dans laquelle R est un radical alkyle comportant au plus 12 atomes de carbone, ou de formule ArLi dans laquelle Ar est le noyau phényle ou le radical benzyle C₆H₅-CH₂-.

2. Procédé selon la revendication 1, caractérisé en ce que la deuxième étape est mise en oeuvre à une température comprise entre -10° et +30°C.

3. Procédé selon l'une des revendications 1 et 2, caractérisé en ce que la deuxième étape est mise en oeuvre sous pression atmosphérique de gaz inerte.

4. Procédé selon l'une des revendications 1 à 3, caractérisé en ce que la deuxième étape est effectuée en mettant en présence une solution du produit de la première étape et une solution de réactif.

5. Procédé selon l'une des revendications 1 à 4, caractérisé en ce que le rapport du métal du réactif au néodyme, lors de la deuxième étape, est au moins égal à 1.

6. Procédé selon l'une des revendications 1 à 5, caractérisé par le fait qu'il conduit à un catalyseur se présentant sous la forme d'une solution contenant, au moins partiellement, un hydrocarbure aromatique.

7. Procédé selon la revendication 6, caractérisé en ce que la concentration du catalyseur, exprimée en néodyme, est comprise entre 0,1 et 100 mmoles/litre.

8. Procédé selon l'une des revendications 1 à 7, caractérisé en ce qu'on utilise, comme réactif, un composé organomagnésien de formule R-Mg-R' dans laquelle R et R', identiques ou différents, sont des radicaux alkyle, substitués ou non, ayant de 1 à 8 atomes de carbone.

9. Procédé selon l'une des revendications 1 à 8, caractérisé en ce qu'on utilise, comme réactif, un composé organomagnésien mixte.

10. Procédé de polymérisation de l'éthylène, caractérisé en ce qu'il consiste à utiliser comme catalyseur au moins un catalyseur tel qu'obtenu au moyen du procédé de préparation conforme à l'une des revendications 1 à 9.

11. Procédé de polymérisation selon la revendication 10, caractérisé en ce qu'il est mis en oeuvre à une température comprise entre 20° et 250°C, de préférence entre 50° et 200°C, sous une pression pouvant aller jusqu'à 200 bars, en solution ou en suspension dans un hydrocarbure inerte ayant au moins 6 atomes de carbone, tel qu'une coupe d'hydrocarbures aliphatiques saturés en C₁₀-C₁₂.

12. Procédé de polymérisation selon la revendication 10, caractérisé en ce qu'il est mis en oeuvre selon un mode continu, dans au moins un réacteur autoclave ou tubulaire, à une température comprise entre 150° et 300°C, sous une pression comprise entre 400 et 2000 bars, le milieu réactionnel étant à l'état hypercritique.

13. Procédé de polymérisation selon l'une des revendications 10 à 12, caractérisé en ce qu'il est mis en oeuvre en présence de jusqu'à 2% en volume d'un agent de transfert tel que l'hydrogène, le propane, le butane ou même jusqu'à 50% en volume d'au moins une alpha-oléfine telle que le propylène, le butène-1.

## Patentansprüche (Patentansprüche für folgende(n) Vertragsstaat(en): AT, BE, CH, DE, DK, GB, GR, IE, IT, LI, LU, NL, SE)

1. Katalysator für die Polymerisation von Ethylen, dadurch gekennzeichnet, dass dieser aus einem Produkt der Reaktion einer Verbindung der Formel Cp^{*}₂NdCl₂Li(OEt₂)₂, worin Cp^{*} einen Pentamethylcyclopentadienyl-Rest und Et einen Ethyl-Rest bedeuten, mit zumindest einem Reagenz ausgewählt aus Organomagnesiumverbindungen und organolithiumverbindungen der Formel RLi, worin R für einen Alkyl-Rest mit höchstens 12 Kchlenstoffatomen steht, oder der Formel ArLi, worin Ar einen Phenyl-Kern oder einen Benzyl-Rest C₆H₅-CH₂- bedeutet, besteht.

2. Katalysator gemäss Patentanspruch 1, dadurch gekennzeichnet, dass dieser sich in Form einer Lösung befindet, welche zumindest teilweise einen aromatischen Kohlenwasserstoff enthält.

3. Katalysator gemäss Patentanspruch 2, dadurch gekennzeichnet, dass seine Konzentration, ausgedrückt in Neodym, zwischen 0,1 und 100 mMol/Liter beträgt.

4. Katalysator gemäss einem der Patentansprüche 1 bis 3, dadurch gekennzeichnet, dass das Reagenz eine Organomagnesiumverbindung der Formel R-Mg-R' ist, worin R und R' gleich oder verschieden sind und für substituierte oder unsubstituierte Alkyl-Reste mit 1 bis 8 Kohlenstoffatomen stehen.

5. Katalysator gemäss einem der Patentansprüche 1 bis 3, dadurch gekennzeichnet, dass das Reagenz eine gemischte Organomagnesiumverbindung ist.

6. Verfahren zur Herstellung eines Katalysators, wie er in einem der Patentansprüche 1 bis 5 definiert wird, zur Polymerisation von Ethylen, wobei dieses Verfahren in einer ersten Stufe aus der Herstellung des Produktes der Formel Cp*₂NdCl₂Li(OEt₂)₂ besteht, worin Cp^{*} einen Pentamethylcyclopentadienyl-Rest und Et einen Ethyl-Rest bedeuten, dadurch gekennzeichnet, dass in einer zweiten Stufe dieses Produkt mit zumindest einem Reagenz, ausgewählt aus Organomagnesiumverbindungen und Organolithiumverbindungen der Formel RLi, worin R für einen Alkyl-Rest mit höchstens 12 Kohlenstoffatomen steht, oder der Formel ArLi, worin Ar einen Phenyl-Kern oder einen Benzyl-Rest C₆H₅-CH₂- bedeutet, umgesetzt wird.

7. Verfahren gemäss Patentanspruch 6, dadurch gekennzeichnet, dass die zweite Stufe bei einer Temperatur zwischen -10 und +30 °C durchgeführt wird.

8. Verfahren gemäss einem der Patentansprüche 6 und 7, dadurch gekennzeichnet, dass die zweite Stufe unter Atmosphärendruck eines inerten Gases durchgeführt wird.

9. Verfahren gemäss einem der Patentansprüche 6 bis 8, dadurch gekennzeichnet, dass die zweite Stufe durchgeführt wird, indem eine Lösung des Produktes der ersten Stufe und eine Lösung des Reagenz anwesend sind.

10. Verfahren gemäss einem der Patentansprüche 6 bis 9, dadurch gekennzeichnet, dass das Verhältnis des Metalls des Reagenz zum Neodym in der zweiten Stufe zumindest gleich 1 ist.

11. Verfahren zur Polymerisation von Ethylen, dadurch gekennzeichnet, dass als Katalysator zumindest ein in den Patentansprüchen 1 bis 5 definierter Katalysator verwendet wird.

12. Verfahren zur Polymerisation gemäss Patentanspruch 11, dadurch gekennzeichnet, dass dieses bei einer Temperatur zwischen 20 °C und 250 °C, vorzugsweise zwischen 50 °C und 200 °C, unter einem Druck, der bis zu 200 bar gehen kann, in Lösung oder in Suspension in einem inerten Kohlenwasserstoff mit zumindest 6 Kohlenstoffatomen, wie einer Fraktion von gesättigten aliphatischen Kohlenwasserstoffen mit C₁₀-C₁₂, durchgeführt wird.

13. Verfahren zur Polymerisation gemäss Patentanspruch 11, dadurch gekennzeichnet, dass dieses in kontinuierlicher Weise in zumindest einem Druck- oder einem Röhrenreaktor bei einer Temperatur zwischen 150 und 300 °C unter einem Druck zwischen 400 und 2000 bar durchgeführt wird, wobei sich das Reaktionsmedium in einem überkritischen zustand befindet.

14. Verfahren zur Polymerisation gemäss einem der Patentansprüche 11 bis 13, dadurch gekennzeichnet, dass dieses in Anwesenheit von bis zu 2 volumen-% eines Übertragungsmittels, wie Wasserstoff, Propan, Butan, oder von bis zu 50 volumen-% zumindest eines Alpha-Olefins, wie Propylen oder 1-Buten, durchgeführt wird.

## Patentansprüche (Patentansprüche für folgende(n) Vertragsstaat(en): ES)

1. Verfahren zur Herstellung eines Katalysators zur Polymerisation von Ethylen, wobei dieses Verfahren in einer ersten Stufe aus der Herstellung des Produktes der Formel Cp^{*}₂NdCl₂Li(OEt₂)₂ besteht, worin Cp^{*} einen Pentamethylcyclopentadienyl-Rest und Et einen Ethyl-Rest bedeuten, dadurch gekennzeichnet, dass in einer zweiten Stufe dieses Produkt mit zumindest einem Reagenz, ausgewählt aus Organomagnesiumverbindungen und Organolithiumverbindungen der Formel RLi, worin R für einen Alkyl-Rest mit höchstens 12 Kohlenstoffatomen steht, oder der Formel ArLi, worin Ar einen Phenyl-Kern oder einen Benzyl-Rest C₆H₅-CH₂- bedeutet, umgesetzt wird.

2. Verfahren gemäss Patentanspruch 1, dadurch gekennzeichnet, dass die zweite Stufe bei einer Temperatur zwischen -10 und +30 °C durchgeführt wird.

3. Verfahren gemäss einem der Patentansprüche 1 und 2, dadurch gekennzeichnet, dass die zweite Stufe unter Atmosphärendruck eines inerten Gases durchgeführt wird.

4. Verfahren gemäss einem der Patentansprüche 1 bis 3, dadurch gekennzeichnet, dass die zweite Stufe durchgeführt wird, indem eine Lösung des Produktes der ersten Stufe und eine Lösung des Reagenz anwesend sind.

5. Verfahren gemäss einem der Patentansprüche 1 bis 4, dadurch gekennzeichnet, dass das Verhältnis des Metalls des Reagenz zum Neodym in der zweiten Stufe zumindest gleich 1 ist.

6. Verfahren gemäss einem der Patentansprüche 1 bis 5, dadurch gekennzeichnet, dass dieses zu einem Katalysator führt, welcher sich in Form einer Lösung befindet, die zumindest teilweise einen aromatischen Kohlenwasserstoff enthält.

7. Verfahren gemäss Patentanspruch 6, dadurch gekennzeichnet, dass die Konzentration des Katalysators, ausgedrückt in Neodym, zwischen 0,1 und 100 mMol/Liter beträgt.

8. Verfahren gemäss einem der Patentansprüche 1 bis 7, dadurch gekennzeichnet, dass man als Reagenz eine Organomagnesiumverbindung der Formel R-Mg-R' verwendet, worin R und R' gleich oder verschieden sind und für substituierte oder unsubstituierte Alkyl-Reste mit 1 bis 8 Kohlenstoffatomen stehen.

9. Verfahren gemäss einem der Patentansprüche 1 bis 8, dadurch gekennzeichnet, dass man als Reagenz eine gemischte Organomagnesiumverbindung verwendet.

10. Verfahren zur Polymerisation von Ethylen, dadurch gekennzeichnet, dass als Katalysator zumindest ein gemäß dem Verfahren nach einem der Patentansprüche 1 bis 9 erhaltenen Katalysator verwendet wird.

11. Verfahren zur Polymerisation gemäss Patentanspruch 10, dadurch gekennzeichnet, dass dieses bei einer Temperatur zwischen 20 und 250 °C, vorzugsweise zwischen 50 und 200 °C, unter einem Druck, der bis zu 200 bar gehen kann, in Lösung oder In Suspension in einem inerten Kohlenwasserstoff mit zumindest 6 Kohlenstoffatomen, wie einer Fraktion von gesättigten aliphatischen Kohlenwasserstoffen mit C₁₀-C₁₂, durchgeführt wird.

12. Verfahren zur Polymerisation gemäss Patentanspruch 10, dadurch gekennzeichnet, dass dieses in kontinuierlicher Weise in zumindest einem Druck- oder einem Röhrenreaktor bei einer Temperatur zwischen 150 und 300 °C unter einem Druck zwischen 400 und 2000 bar durchgeführt wird, wobei sich das Reaktionsmedium in einem überkritischen Zustand befindet.

13. Verfahren zur Polymerisation gemäss einem der Patentansprüche 10 bis 12, dadurch gekennzeichnet, dass dieses in Anwesenheit von bis zu 2 Volumen-% eines Übertragungsmittels, wie Wasserstoff, Propan, Butan, oder von bis zu 50 Volumen-% zumindest eines Alpha-Olefins, wie Propylen oder 1-Buten, durchgeführt wird.

## Claims (Claims for the following Contracting State(s): AT, BE, CH, DE, DK, GB, GR, IE, IT, LI, LU, NL, SE)

1. Catalyst for the polymerisation of ethylene, characterised in that it consists of the product of reaction of the compound of formula Cp*₂NdCl₂Li(OEt₂)₂, in which Cp* denotes the pentamethylcyclopentadienyl radical and Et the ethyl radical, with at least one reactant chosen from organomagnesium compounds and organolithium compounds of formula RLi in which R is an alkyl radical containing not more than 12 carbon atoms, or of formula ArLi in which Ar is the phenyl nucleus or the benzyl radical C₆H₅-CH₂-.

2. Catalyst according to Claim 1, characterised in that it is in the form of a solution at least partially containing an aromatic hydrocarbon.

3. Catalyst according to Claim 2, characterised in that its concentration, expressed as neodymium, is between 0.1 and 100 millimoles/litre.

4. Catalyst according to one of Claims 1 to 3, characterised in that the reactant is an organomagnesium compound of formula R-Mg-R' in which R and R', which are identical or different, are substituted or unsubstituted alkyl radicals containing from 1 to 3 carbon atoms.

5. Catalyst according to one of Claims 1 to 3, characterised in that the reactant is a mixed organomagnesium compound.

6. Process for the preparation of a catalyst as defined in one of Claims 1 to 5, for the polymerisation of ethylene, the said process consisting in a first stage in preparing the product of formula Cp^{*}₂NdCl₂Li(OEt₂)₂, in which Cp* denotes the pentamethylcyclopentadienyl radical and Et the ethyl radical, characterised in that, in a second stage, the said product is reacted with at least one reactant chosen from organomagnesium compounds and organolithium compounds of formula RLi in which R is an alkyl radical containing not more than 12 carbon atoms, or of formula ArLi in which Ar is the phenyl nucleus or the benzyl radical C₆H₅-CH₂-.

7. Process according to Claim 6, characterised in that the second stage is carried out at a temperature of between -10° and +30°C.

8. Process according to either of Claims 6 and 7, characterised in that the second stage is carried out under inert gas at atmospheric pressure.

9. Process according to one of Claims 6 to 8, characterised in that the second stage is performed by bringing a solution of the product of the first stage into contact with a solution of reactant.

10. Process according to one of Claims 6 to 9, characterised in that the ratio of the metal of the reactant to neodymium, during the second stage, is at least 1.

11. Process for the polymerisation of ethylene, characterised in that it consists in employing as catalyst at least one catalyst as defined in one of Claims 1 to 5.

12. Polymerisation process according to Claim 11, characterised in that it is carried out at a temperature of between 20° and 250°C, preferably between 50° and 200°C, at a pressure which may go up to 200 bars, in solution or in suspension in an inert hydrocarbon containing at least 6 carbon atoms, such as a C₁₀-C₁₂ saturated aliphatic hydrocarbon cut.

13. Polymerisation process according to Claim 11, characterised in that it is carried out by a continuous method in at least one autoclave or tubular reactor, at a temperature of between 150° and 300°C, at a pressure of between 400 and 2000 bars, the reaction mixture being in the supercritical state.

14. Polymerisation process according to one of Claims 11 to 13, characterised in that it is carried out in the presence of up to 2 % by volume of a transfer agent such as hydrogen, propane, butane, or even up to 50 % by volume of at least one alpha-olefin such as propylene or 1-butene.

## Claims (Claims for the following Contracting State(s): ES)

1. Process for the preparation of a catalyst for the polymerisation of ethylene, the said process consisting, in a first stage, in preparing the product of formula Cp*₂NdCl₂Li(OEt₂)₂, in which Cp* denotes the pentamethylcyclopentadienyl radical and Et the ethyl radical, characterised in that, in a second stage, the said product is reacted with at least one reactant chosen from organomagnesium compounds and organolithium compounds of formula RLi in which R is an alkyl radical containing not more than 12 carbon atoms, or of formula ArLi in which Ar is the phenyl nucleus or the benzyl radical C₆H₅-CH₂-.

2. Process according to Claim 1, characterised in that the second stage is carried out at a temperature of between -10° and +30°C.

3. Process according to either of Claims 1 and 2, characterised in that the second stage is carried out under inert gas at atmospheric pressure.

4. Process according to one of Claims 1 to 3, characterised in that the second stage is performed by bringing a solution of the product of the first stage into contact with a solution of reactant.

5. Process according to one of Claims 1 to 4, characterised in that the ratio of the metal of the reactant to neodymium, during the second stage, is at least 1.

6. Process according to one of Claims 1 to 5, characterised in that it leads to a catalyst which is in the form of a solution at least partially containing an aromatic hydrocarbon.

7. Process according to Claim 6, characterised in that the concentration of the catalyst, expressed as neodymium, is between 0.1 and 100 millimoles/litre.

8. Process according to one of Claims 1 to 7, characterised in that an organomagnesium compound of formula R-Mg-R' in which R and R', which are identical or different, are substituted or unsubstituted alkyl radicals containing from 1 to 8 carbon atoms is used as reactant.

9. Process according to one of Claims 1 to 8, characterised in that a mixed organomagnesium compound is used as reactant.

10. Process for the polymerisation of ethylene, characterised in that it consists in employing as catalyst at least one catalyst as obtained by means of the process of preparation in accordance to one of Claims 1 to 9.

11. Polymerisation process according to Claim 10, characterised in that it is carried out at a temperature of between 20° and 250°C, preferably between 50° and 200°C, at a pressure which may go up to 200 bars, in solution or in suspension in an inert hydrocarbon containing at least 6 carbon atoms, such as a C₁₀-C₁₂ saturated aliphatic hydrocarbon cut.

12. Polymerisation process according to Claim 10, characterised in that it is carried out by a continuous method in at least one autoclave or tubular reactor, at a temperature of between 150° and 300°C, at a pressure of between 400 and 2000 bars, the reaction mixture being in the supercritical state.

13. Polymerisation process according to one of Claims 10 to 12, characterised in that it is carried out in the presence of up to 2 % by volume of a transfer agent such as hydrogen, propane, butane, or even up to 50 % by volume of at least one alpha-olefin such as propylene or 1-butene.
